# EUROPEAN PATENT SPECIFICATION

(11) **EP 3 564 877 B1**
(45) Date of publication and mention of the grant of the patent: **20.04.2022**
(21) Application number: 18170034.5
(22) Date of filing: 30.04.2018
(51) Int. Cl.: G06Q 10/08, G06Q 10/10, G06Q 50/28

(54) **CARGO PORT ARRANGEMENT**
LADEBUCHTSSANORDNUNG
AGENCEMENT DE PORT DE CHARGEMENT

(43) Date of publication of application: 06.11.2019
(73) Proprietor: Robert Bosch GmbH, 70442 Stuttgart (DE); FREIGHTSAFE LTD., London SW8 4BG (GB)
(72) Inventor: ANDERSON, Charles, Surrey, Surrey KT3 5ER (GB); WEERS, Jan-Philipp, 65812 Bad Soden (DE); ULLRICH, Frank, 63322 Roedermark (DE)

(56) References cited:
- WO-A1-2017/054840
- DE-A1-102012 210 102
- US-A1- 2007 061 192
- US-B2- 9 666 075
- DATABASE WPI Week 201708 Thomson Scientific, London, GB; AN 2017-03181P XP002783189, & WO 2017/004759 A1 (FENG X) 12 January 2017 (2017-01-12)

## Description

The invention concerns a cargo port arrangement for a cargo port, the cargo port comprising a plurality of cargo bays, whereby each cargo bay is adapted for accommodating a truck, the cargo port arrangement comprising a reservation apparatus for reserving the cargo bays and for providing reservation data, and at least one identification module for identifying the truck and for providing truck identifying data.

### State of the art

Trucks are used to transport goods over distances, for example to transport goods between a producer of the goods and the point of sale of the goods. Especially on long distance transports, it is necessary to make stops to allow the drivers to sleep. During the stops it is a risk, that the trucks are attacked and robbed or that at least parts of the cargo of the trucks are stolen.

In order to prevent the trucks from criminal actions, it is known to use parking areas, which are monitored by security staff during the stay of the trucks. As the quality of the guarding may not be constant, it is also known to use automatically monitored parking areas in order to ensure a constant, high-quality guarding of the parking area.

The document US 9 666 075 B2 describes an automated system for managing one or more parking spaces, that includes a vehicle identification detector for detecting vehicles in a parking space area, a dynamically updatable display device mounted in the parking space area, and a computer subsystem that dynamically updates the display device with messages or images to be communicated in real time to the operator of the vehicle that is being parked.

The Document US 2007/061192 A1 presents a method for use in the management of vehicle parking in a vehicle parking area having a plurality of vehicle parking spaces, the method comprising determining the locations of vacant vehicle parking spaces; and displaying the locations of vacant vehicle parking spaces to people seeking to park vehicles.

Furthermore, the Document WO 2017/004759 A1 describes a parking space reservation system comprises a parking lot data management and control unit, a parking space vehicle sensing device, a license plate recognition device, an Internet-based cloud server, and a client.

The document WO 2017/054840 A1 discloses a hotel facility system to optimize the time between arrival and entry of a guest in the hotel.

The document DE 10 2012 210 102 A1 discloses a surveillance system for a parking area with a plurality of parking lots comprising at least one camera for guarding the parking lot and a system unit adapted to define one of the parking lots as a guarded parking lot and to control the camera to monitor the guarded parking lot. The system further provides a booking unit for providing security parking lot specifications, which are used from the system unit.

### Disclosure of the invention

The invention concerns a cargo port arrangement with the features of claim 1. Further preferred embodiments of the invention are provided by the dependent claims, the description and the figures as attached.

Subject-matter of the invention is a cargo port arrangement for a cargo port, which is used to accommodate a plurality of trucks. The trucks are adapted to transport cargo, especially goods, for example machines, food, animals et cetera. The trucks comprise for example a tractor and a trailer.

The cargo port comprises a plurality of cargo bays. For example, the cargo port comprises more than five, especially more than 10 cargo bays. Each cargo bay is adapted to accommodate a truck, especially exactly one track. Preferably the cargo bays are organised in one or more rows, so that one cargo bay is located adjacent to the next cargo bay.

The cargo port arrangement comprises a reservation apparatus for reserving, especially booking, the cargo bays and for providing reservation data, especially about the reserved and/or booked cargo bay. The reservation apparatus may be embodied as a computer system, especially as a server and client system as explained below. The reservation apparatus is adapted for reserving the cargo bays, especially booking the cargo bays. For example one of the cargo bays may be booked for a selected date. The reservation apparatus is furthermore adapted for providing reservation data. The reservation data may comprise an identification datum of the reserved cargo bay, the reservation date, data about the reserving person and/or the reserving company and/or the truck to be used in the cargo bay et cetera.

The cargo port arrangement comprises at least one identification module for identifying the truck and for providing truck identifying data. The identification module may be a centralised unit, for example a computer system with sensors, and/or a decentralised unit, for example comprising a cloud or internet service. The identification module is especially adapted to identify a truck, which intends to enter one of the cargo bays. The identification module is furthermore adapted to provide truck identifying data. The identification module preferably comprises sensors or cameras for sensing the truck and for example a digital processing unit for processing the sensor or camera signal in order to retrieve the truck identifying data. The truck identifying data may for example comprise data about the license plate of the truck, especially the license plate number.

According to the invention, each cargo bay comprises an access module. The access module comprises preferably a digital processing unit, for example a PC or the like. The access module is adapted to receive the reservation data for the corresponding cargo bay and the truck identifying data for the truck trying to or waiting for access the corresponding cargo bay for example. The reservation data and the truck identifying data for the same cargo bay is thus input data for the corresponding access module. The access module may be a physical module placed in or near the respective cargo bay. Alternatively, the access module may be a software module assigned to the respective cargo bay.

On basis of the input data and optionally further data the access module decides whether to grant or prevent access for the truck to the corresponding cargo bay. In case of grant of access, a door or gate is opened in case of prevent of access, a door or gate is closed or is kept close.

It is a finding of the invention that monitoring parking areas is an improvement of the security of the parking areas. But only monitoring the parking areas does not allow controlling the truck traffic in the parking areas or the protection of the trucks. In case the cargo bays have the access module for granting or preventing access to the truck being accommodated in the cargo bay, the security for the trucks and thus of the parking areas is increased significantly, because the trucks can be locked away for the stay in the cargo bays.

In a preferred embodiment of the invention the identification module comprises an automatic license plate recognition unit. The automatic license plate recognition unit is adapted for automatically recognising the license plate of the trucks. The automatic license plate recognition unit may comprise a camera for capturing an image of the truck and digital processing means for performing a digital image processing of the captured image in order to extract the license plate, especially the license plate number of the truck. The digital processing means may for example be a PC, DSP, FPGA et cetera. Furthermore the automatic license plate recognition unit is adapted to provide automatic truck identifying data, which forms a part of the truck identifying data. For example, the automatic truck identifying data is the number printed on the license plate. In this embodiment the cargo port arrangement can be operated automatically, whereby the license plate of a waiting truck is detected by the automatic license plate recognition unit. The automatic truck identifying data is sent as the truck identifying data to the access module, which decides on basis of the sent truck identifying data and the reservation data whether to grant or prevent access for the truck.

In a possible development, the cargo port arrangement comprises a video surveillance system for providing surveillance data and a control centre for manually evaluating the surveillance data, for example by guards and/or agents. The control centre may be located decentralised, for example more than 10 km, especially more than 50 km away from the cargo port bays. The surveillance system comprises cameras for monitoring areas of the cargo port. The surveillance data comprises images captured by the surveillance system. The control centre comprises digital processing units for receiving and displaying the surveillance data.

In a further development the video surveillance system comprises an external video surveillance section for monitoring the truck outside the cargo bay. The external video surveillance section comprises at least one camera. The external video surveillance section is adapted for providing external surveillance data, especially from an area in front of the cargo bay or bays. The video surveillance system and/or the external video surveillance section is adapted to send or to provide the external surveillance data to the control centre. The external surveillance data may for example be sent over the Internet to the control centre. In the control centre the external surveillance data may be analysed manually in order to derive information about the license plate number from the truck as manual truck identifying data. For example, the information about the license plate may be read by a guard from an image of the truck and maybe input into the digital processing unit for example by a keyboard. The control centre sends the manual truck identifying data as part of the truck identifying data as a response to the transmission of the external surveillance data to the access module. The access module uses the manual truck identifying data and the truck identifying data for the decision or for a versification of the decision to grant or prevent access for the truck to the corresponding cargo bay.

It is especially preferred that that both, the automatic and the manual truck identifying data is used as the truck identifying data as a basis of the decision whether or not to grant or to prevent access for the truck to the corresponding cargo bay.

The generation of the manual truck identifying data may be automatically triggered by detecting a truck in front of one of the cargo bays, whereby the triggering and/or detection may be performed by the automatic license plate recognition unit and/or by digital image processing of the images captured by the external video surveillance section, for example in the control centre.

According to the invention the video surveillance system comprises an internal truck video surveillance section for monitoring the truck in the cargo bay. For example in each cargo bay at least one camera, preferably a plurality of cameras, especially four cameras are placed to monitor the truck when it is parked in the cargo bay. The surveillance data provided by the internal truck video surveillance section may be sent to the control centre for manual monitoring by the guards. In this development the truck can be monitored during its stay in the cargo bay.

In a further development, the cargo port comprises a community area for the drivers of the trucks. The community area is connected to the cargo bay or cargo bays. The community area may comprise a living room, a kitchen, a television room and/or a lounge et cetera. The cargo port arrangement furthermore comprises an internal community area video surveillance section for monitoring the community area. The surveillance data provided by the internal community area video surveillance section may be sent to the control centre for manual monitoring by the guards. In this development the driver may be monitored during his stay in the cargo bay, when he is in the community area. It is possible to monitor and thus prevent any misbehaviour in the community area.

It is preferred that the cargo port has a plurality of driver rooms, whereby the driver rooms are assigned to the cargo bays one-to-one. In a possible realisation the driver room is separated only by a door from the cargo bay. In this realisation the driver sleeps in direct neighbourhood to his truck being parked in the cargo bay. Additionally it is possible that the driver rooms are connected to the community area. The driver rooms may be between the cargo bays and the community area, so that the driver may through one door visit his truck and through another door may enter the community area.

It is preferred that the cargo port arrangement comprises a person access control system in order to control the doors between the surrounding area and the cargo bay, between the cargo bay and the driver room, between the driver room and the community area and/or between the community area and the surrounding area. The person access control system may comprise PIN-pads with or without RFIDs to control the possible accessible areas for the driver, who made a reservation for one of the cargo bays. Depending on the reservation data or booking details, which are preferably provided by the reservation apparatus, the driver may be allowed to enter the community area or the driver room connected to the corresponding cargo bay.

The reservation apparatus comprises a reservation server and reservation clients. The reservation server may be a physical server, which is for example provided in the control centre or elsewhere. Otherwise the reservation server may be realised as a virtual server or as a cloud service. The reservation clients are adapted to make, confirm and/or cancel reservations and/or retrieve reservation information, booking information, booking details et cetera.

In a possible realisation the reservation clients comprise a smart-phone as an example for an edge or network device for retrieving reservation information. In this realisation the driver is able to retrieve reservation information from his own smart phone during driving the truck. Instead of a smart phone other devices like pads et cetera may be used.

Alternatively or additionally the reservation clients comprise a web-interface for making reservations et cetera. The web interface may for example be hosted by the reservation server or the control centre.

Each cargo bay is realised as a closed compartment, especially as a closed box. Especially each cargo bay is separated from the other cargo bays, so that the drivers of the trucks are not able to enter the cargo bays and/or trucks not belonging to the reserved cargo bay.

The invention further concerns a cargo port comprising a plurality of cargo bays, whereby each cargo bay is adapted for accommodating a truck, and a cargo port arrangement as described.

Further features, advantages and effects of the invention will become apparent by the description of preferred embodiment of the invention and the figure as attached. The figure show:

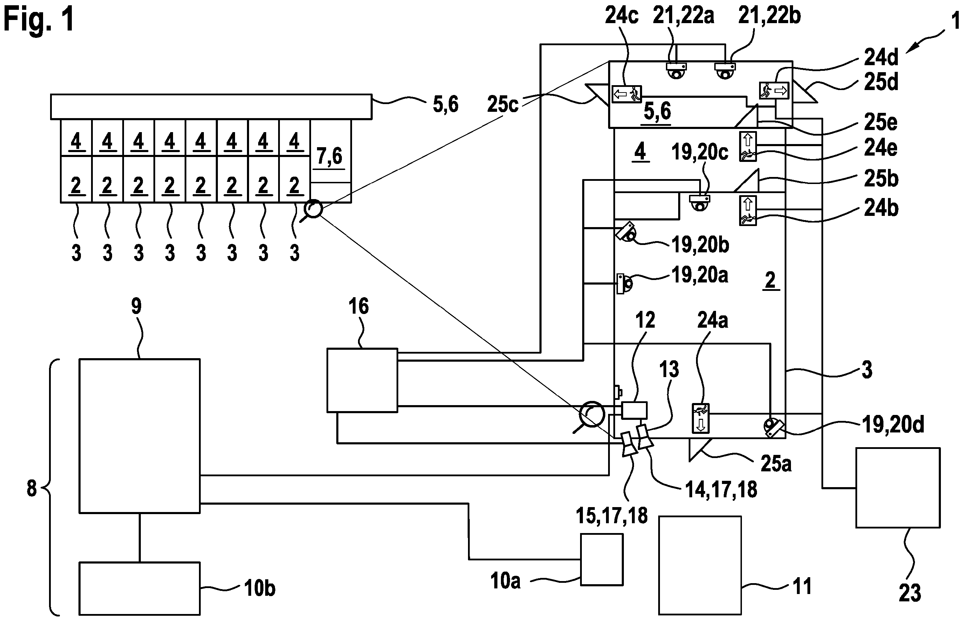

- Figure 1: a block diagram of the cargo port arrangement as an embodiment of the invention.

Figure 1 shows a block diagram of a cargo port arrangement 1 for a cargo port as an embodiment of the invention. On the left side of figure 1 and overall view of the cargo port is presented, on the right side are detailed view of the cargo port arrangement 1 is shown.

The cargo port comprises a plurality of cargo bays 2, which are arranged side-by-side in a row. Doors, for example roller doors 3, of the cargo bays 2 are arranged side-by-side at a head end and are orientated in the same direction. Next to each cargo bay 2, driver rooms 4 are arranged at a foot end of the cargo bays 2. The driver rooms 4 are connected to a corridor 5 as a part of a community area 6. The corridor 5 and/or the community area 6 extend in parallel to the row of the cargo bays 2. The corridor 5 leads to a lounge 7 or a kitchen as a further part of a community area 6.

The essential function of the cargo port arrangement 1 as described above is, that a truck 11 may be driven by a driver into one of the cargo bays 2. After parking the truck 11 in the cargo bay 2, the driver leaves the truck 11 and may sleep in the driver room 4 or spend his time in the community area 6. The cargo bays 2 are realised as closed-off areas which are separated from each other, from the community area 6 and/or from the surroundings. For example the cargo bays 2 may be built as closed boxes having sidewalls, front and back walls and a roof.

The cargo port arrangement 1 provides a plurality of reservation and security functions, which are enabled by further components of the cargo bay arrangement 1. It further comprises a reservation apparatus 8 with a reservation server 9 and a plurality of reservation clients 10 a, b, whereby the reservation client 10 a is a smart phone, which can be used by the driver and which is connected to the reservation server 9 over the Internet or another communication system. The reservation client 10 b is a web interface, which can be used for example in PC or the like.

The cargo port arrangement 1 comprises at least one identification module for identifying the truck 11 standing in front of the cargo bays 2. The identification module provides truck identifying data from the truck 8, which was identified.

Each of the cargo bays 2 has an access module 12, which controls the access to the cargo bays 2.

On the one hand side the access module 12 is connected to the identification module, so that truck identifying data is transferred to the access module 12 or can be retrieved from the access module 12. On the other hand side the access module 12 is connected to the reservation apparatus 8, especially the reservation server 9, for receiving reservation data concerning the respective cargo bay 2.

On basis of the truck identifying data and the reservation data, the access module 12 can decide whether to grant access for the truck 11 to the corresponding cargo bay 2 or to prevent access for the truck 11 to the corresponding cargo bay 2. Grant of access can be made by opening the door 3, prevent of access can be made by closing the door 3 or keeping the door 3 closed. The truck identifying data may comprise information about the license plate number of the truck 11. The reservation data may comprise information about which cargo bay 2 was reserved or booked and for which truck 11 the reservation was done, whereby the reservation data may especially comprise the license plate number of the respective truck 11. The access module 12 compares the license plate number of the reservation with the license plate number from the identification module and in case of concordance, the access is granted.

One identification module is realised as an automatic license plate recognition unit 13 comprising a camera 14, which monitor or the surrounding in front of the cargo bay 2. The automatic license plate recognition unit 13 may be work on basis of digital image processing, extracting the license plate from an image and afterwards converting the extracted license plate into the license plate number.

Another identification module is realised as a manual license plate recognition system, which is based on the combination of a further camera 15 (or the same camera 14) and a control centre 16, which is connected to the camera 14 or 15. The connection may be realised over the Internet. An image of the waiting truck 11 is captured by the camera 14 or 15 and is transferred to the control centre 16. Within the control centre 16 a human person, especially a guard, extracts the license plate number from the image of the truck 11 and sends the license plate number or other truck identifying data to the access module 12. The extracting of the license plate number by the guard of the control centre 16 may be triggered by a separate signal. The transmitting of the license plate number as manual truck identifying data to the access module 12 is a response to the incoming image from the truck 11 to the control centre 16.

The access module 12 can compare the manual truck identifying data and the automatic truck identifying data with the reservation data. Thus double-checking of the license plate number of the truck 11 is performed.

The cameras 14, 15 as an external video surveillance section 17 may be part of a video surveillance system 18. The video surveillance system 18 furthermore comprises an internal truck video surveillance section 19 comprising four cameras 20 a,b,c,d which are within the cargo bay 2 and which monitor the truck 11 when it is parked in the cargo bay 2. The image data from the internal truck video surveillance section 19 is forwarded to the control centre 16. Also the image data from the internal truck video surveillance section 19 can be controlled by guards.

The video surveillance system 18 furthermore comprises an internal community area video surveillance section 21 comprising two cameras 22 a, b which are within the community area 6. The image data from the internal community area video surveillance section 21 is forwarded to the control centre 16. Also the image data from the internal community area video surveillance section 21 can be monitored by guards.

The cargo port arrangement 1 furthermore comprises a person access control system 23 for controlling of the doors between the surroundings and the cargo bay 2, between the cargo bay 2 and the driver room 4, between the driver room 4 and the community area 6. For example terminals 24 a, b, c, d, e are arranged beside the doors 25 a, b, c, d, e connecting the said sections.

From a functional point of view a user can make a reservation with the help of the reservation client 10 b, for example over the Internet. The reservation is received by the reservation server 9. The web interface of the reservation client 10 b may for example display a map with all locations for such cargo port, especially for the cargo bays 2. Within the web interface not only the locations but also the availability of cargo bays 2 are shown preferably in real-time. The user has the possibility to make an online booking with authorisation and availability check. The user has also the possibility to change or cancel bookings. The user will receive a booking confirmation.

After the step of reservation, the driver of the truck 11 will receive a notification via app on the reservation client 10 a. In addition to the notification also booking credentials, e.g. individual pin number for the driver room 4 and/or the peson access control system 23, are delivered.

After the driver arrived at the reserved cargo bay 2, the truck 11 is identified by the identification module for the check-in, in this embodiment the automatic license plate recognition unit 13 and by the additional check by the control centre 16. After the detection of the license plate, information about the license plate is transferred to the access module 12. The access module 12 compares the detected license plate and compares it with the license plate data from reservation data. The checking of the license plate by the control centre 16 may be incident triggered. Optionally a notification of dispatcher is triggered.

After the truck 11 was granted access to the respective cargo bay 2, for example by opening the roller door 3, the driver parks the truck 11 in the cargo bay 2. The secure overnight stay of the driver and the truck 11 is guaranteed by the person access control system 23, which controls all doors 25 a, b, c, d, e, and additionally by the control the control centre 16 using the different sections of the video surveillance system 18.

After the night and during the check-out, all actions an incident triggered monitoring is performed by the guards in the control centre 16. Optionally a notification of dispatcher is triggered. It is possible, that a detailed reporting of all parking transactions is made by a protocol module.

## Claims

1. Cargo port arrangement (1) for a cargo port with a plurality of cargo bays (2), whereby each cargo bay (2) is adapted for accommodating a truck (11), whereby the cargo bays (2) are realised as closed-off areas which are separated from each other,
the cargo port arrangement (1) comprising
a reservation apparatus (8) for reserving the cargo bays (2) and for providing reservation data,
at least one identification module for identifying the truck (11) and for providing truck identifying data,
whereby each cargo bay (2) comprises an access module (12),
whereby the access module (12) is adapted to receive the reservation data for the cargo bay (2) and the truck identifying data for the truck accessing the corresponding cargo bay (2)
and is adapted to decide on basis of the reservation data and the truck identifying data whether to grant or prevent access for the truck (11) to the corresponding cargo bay (2),
whereby in case of grant of access, a door or gate is opened in case of prevent of access, a door or gate is closed or is kept close,
whereby the video surveillance system (18) comprises an internal truck video surveillance section (19) for monitoring the truck in the cargo bay (2), wherein in each cargo bay (2) at least one camera (20 a, b, c, d) is placed to monitor the truck (11) when it is parked in the cargo bay (2).

2. Cargo port arrangement (1) according to claim 1, **characterised in that** the identification module comprises an automatic license plate recognition unit (13) for automatically recognizing a plate of the trucks (11) and for providing automatic truck identifying data as a part of the truck identifying data.

3. Cargo port arrangement (1) according to one of the preceding claims, **characterised by** a video surveillance system (18) for providing surveillance data and a control centre (16) for manually evaluating the surveillance data.

4. Cargo port arrangement (1) according to claim 3, **characterized in that** the video surveillance system (18) comprises an external video surveillance section (17) for monitoring the truck (11) outside the cargo bay (2) and for providing external surveillance data.

5. Cargo port arrangement (1) according to claim 4, **characterised in that** the control centre (16) is adapted to provide manual truck identifying data as a part of the truck identifying data as a response to the external surveillance data.

6. Cargo port arrangement (1) according to claim 3 to 5, **characterized by** an internal community area video surveillance section (21) for monitoring a community area (6), whereby the community area (6) is connected to the cargo bay (2).

7. Cargo port arrangement (1) according to one of the preceding claims, **characterized by** a person access control system (23) for control of doors (25 a, b, c, d, e) between the surrounding area and the cargo bay (2), between the cargo bay (2) and a driver room (4), between the driver room (4) and the community area (6) and/or the community area (6) and the surrounding area.

8. Cargo port arrangement (1) according to a one of the preceding claims, **characterised in that** the reservation apparatus (8) comprises a reservation server (9) and reservation clients (10a,b), whereby the reservation clients (10a,b) are adapted to make, confirm and/or cancel reservations and/or retrieve reservation information.

9. Cargo port arrangement (1) according to claim 8, **characterised in that** the reservation clients (10a) comprise a smart phone or another edge device for retrieving reservation information.

10. Cargo port arrangement (1) according to claim 8 or 9, **characterised in that** the reservation clients (10b) comprise a web-interface for booking purposes.

## Patentansprüche

1. Frachthafenanordnung (1) für einen Frachthafen mit einer Mehrzahl von Frachtbuchten (2), wobei jede Frachtbucht (2) dazu ausgelegt ist, einen Lastkraftwagen (11) aufzunehmen, wobei die Frachtbuchten (2) als abgeschlossene Bereiche, die voneinander getrennt sind, ausgeführt sind,
wobei die Frachthafenanordnung (1) umfasst eine Reservierungseinrichtung (8) zum Reservieren der Frachtbuchten (2) und zum Bereitstellen von Reservierungsdaten,
mindestens ein Identifikationsmodul zum Identifizieren des Lastkraftwagens (11) und zum Bereitstellen von Lastkraftwagenidentifikationsdaten,
wobei jede Frachtbucht (2) ein Zugangsmodul (12) umfasst,
wobei das Zugangsmodul (12) dazu ausgelegt ist, die Reservierungsdaten für die Frachtbucht (2) und die Lastkraftwagenidentifikationsdaten für den Lastkraftwagen, der in die entsprechende Frachtbucht (2) einfährt, zu empfangen,
und dazu ausgelegt ist, auf Basis der Reservierungsdaten und der Lastkraftwagenidentifikationsdaten zu entscheiden, ob ein Zugang für den Lastkraftwagen (11) zu der entsprechenden Frachtbucht (2) gewährt oder verhindert wird,
wobei im Fall einer Gewährung eines Zugangs eine Tür oder ein Tor geöffnet wird, im Fall eines Verhinderns eines Zugangs eine Tür oder ein Tor geschlossen wird oder geschlossen bleibt,
wobei das Videoüberwachungssystem (18) einen internen Lastkraftwagenvideoüberwachungsabschnitt (19) zum Überwachen des Lastkraftwagens in der Frachtbucht (2) umfasst, wobei in jeder Frachtbucht (2) mindestens eine Kamera (20 a, b, c, d) platziert ist, um den Lastkraftwagen (11) zu überwachen, wenn er in der Frachtbucht (2) geparkt ist.

2. Frachthafenanordnung (1) nach Anspruch 1, **dadurch gekennzeichnet, dass** das Identifikationsmodul eine automatische Kraftfahrzeugkennzeichenerkennungseinheit (13) zum automatischen Erkennen eines Kennzeichens des Lastkraftwagens (11) und zum Bereitstellen von automatischen Lastkraftwagenidentifikationsdaten als einen Teil der Lastkraftwagenidentifikationsdaten umfasst.

3. Frachthafenanordnung (1) nach einem der vorhergehenden Ansprüche, **gekennzeichnet durch** ein Videoüberwachungssystem (18) zum Bereitstellen von Überwachungsdaten und ein Steuerzentrum (16) zur manuellen Auswertung der Überwachungsdaten.

4. Frachthafenanordnung (1) nach Anspruch 3, **dadurch gekennzeichnet, dass** das Videoüberwachungssystem (18) einen externen Videoüberwachungsabschnitt (17) zum Überwachen des Lastkraftwagens (11) außerhalb der Frachtbucht (2) und zum Bereitstellen externer Überwachungsdaten umfasst.

5. Frachthafenanordnung (1) nach Anspruch 4, **dadurch gekennzeichnet, dass** das Steuerzentrum (16) dazu ausgelegt ist, manuelle Lastkraftwagenidentifikationsdaten als einen Teil der Lastkraftwagenidentifikationsdaten in Reaktion auf die externen Überwachungsdaten bereitzustellen.

6. Frachthafenanordnung (1) nach Anspruch 3 bis 5, **gekennzeichnet durch** einen internen Gemeinschaftsbereichsvideoüberwachungsabschnitt (21) zum Überwachen eines Gemeinschaftsbereichs (6), wobei der Gemeinschaftsbereich (6) mit der Frachtbucht (2) verbunden ist.

7. Frachthafenanordnung (1) nach einem der vorhergehenden Ansprüche, **gekennzeichnet durch** ein Personenzugangssteuersystem (23) zum Steuern von Türen (25 a, b, c, d, e) zwischen dem umgebenden Bereich und der Frachtbucht (2), zwischen der Frachtbucht (2) und einem Fahrerraum (4), zwischen dem Fahrerraum (4) und dem Gemeinschaftsbereich (6) und/oder dem Gemeinschaftsbereich (6) und dem umgebenden Bereich.

8. Frachthafenanordnung (1) nach einem der vorhergehenden Ansprüche, **dadurch gekennzeichnet, dass** die Reservierungseinrichtung (8) einen Reservierungsserver (9) und Reservierungsclients (10a,b) umfasst, wobei die Reservierungsclients (10a,b) dazu ausgelegt sind, Reservierungen zu machen, zu bestätigen und/oder zu stornieren und/oder Reservierungsinformationen abzurufen.

9. Frachthafenanordnung (1) nach Anspruch 8, **dadurch gekennzeichnet, dass** die Reservierungsclients (10a) ein Smartphone oder eine andere Edge-Vorrichtung zum Abrufen von Reservierungsinformationen umfassen.

10. Frachthafenanordnung (1) nach Anspruch 8 oder 9, **dadurch gekennzeichnet, dass** die Reservierungsclients (10b) eine Internetschnittstelle für Buchungszwecke umfassen.

## Revendications

1. Agencement (1) de port de chargement pour un port de chargement doté d'une pluralité de postes (2) de chargement, chaque poste (2) de chargement étant conçu pour accueillir un camion (11), les postes (2) de chargement étant réalisés comme des zones closes qui sont séparées les unes des autres,
l'agencement (1) de port de chargement comportant un appareil (8) de réservation servant à réserver les postes (2) de chargement et à fournir des données de réservation,
au moins un module d'identification servant à identifier le camion (11) et à fournir des données d'identification de camion,
chaque poste (2) de chargement comportant un module (12) d'accès,
le module (12) d'accès étant conçu pour recevoir les données de réservation relatives au poste (2) de chargement et les données d'identification de camion relatives au camion accédant au poste (2) de chargement correspondant
et étant conçu pour décider, d'après les données de réservation et les données d'identification de camion, s'il convient d'accorder ou d'empêcher l'accès du camion (11) au poste (2) de chargement correspondant, une porte ou un portail étant ouverts en cas d'octroi d'accès, une porte ou un portail étant fermés ou étant maintenus fermés en cas de refus d'accès,
le système (18) de surveillance vidéo comportant une section (19) de surveillance vidéo interne de camion servant à surveiller le camion dans le poste (2) de chargement, au moins une caméra (20a, b, c, d) étant placée dans chaque poste (2) de chargement pour surveiller le camion (11) lorsqu'il est stationné dans le poste (2) de chargement.

2. Agencement (1) de port de chargement selon la revendication 1, **caractérisé en ce que** le module d'identification comporte une unité (13) de reconnaissance automatique de plaque d'immatriculation servant à reconnaître automatiquement une plaque des camions (11) et à fournir des données d'identification automatique de camion comme une partie des données d'identification de camion.

3. Agencement (1) de port de chargement selon l'une des revendications précédentes, **caractérisé par** un système (18) de surveillance vidéo servant à fournir des données de surveillance et un centre (16) de commande servant à évaluer manuellement les données de surveillance.

4. Agencement (1) de port de chargement selon la revendication 3, **caractérisé en ce que** le système (18) de surveillance vidéo comporte une section (17) de surveillance vidéo externe servant à surveiller le camion (11) à l'extérieur du poste (2) de chargement et à fournir des données de surveillance externe.

5. Agencement (1) de port de chargement selon la revendication 4, **caractérisé en ce que** le centre (16) de commande est conçu pour fournir des données d'identification manuelle de camion comme une partie des données d'identification de camion en réponse aux données de surveillance externe.

6. Agencement (1) de port de chargement selon les revendications 3 à 5, **caractérisé par** une section (21) de surveillance vidéo interne de zone de communauté servant à surveiller une zone (6) de communauté, la zone (6) de communauté étant reliée au poste (2) de chargement.

7. Agencement (1) de port de chargement selon l'une des revendications précédentes, **caractérisé par** un système (23) de contrôle d'accès de personnes servant à la commande de portes (25a, b, c, d, e) entre la zone environnante et le poste (2) de chargement, entre le poste (2) de chargement et une salle (4) des conducteurs, entre la salle (4) des conducteurs et la zone (6) de communauté et/ou la zone (6) de communauté et la zone environnante.

8. Agencement (1) de port de chargement selon l'une des revendications précédentes, **caractérisé en ce que** l'appareil (8) de réservation comporte un serveur (9) de réservation et des clients (10a, b) de réservation, les clients (10a, b) de réservation étant conçus pour effectuer, confirmer et/ou annuler des réservations et/ou récupérer des informations de réservation.

9. Agencement (1) de port de chargement selon la revendication 8, **caractérisé en ce que** les clients (10a) de réservation comportent un ordiphone ou un autre dispositif de périphérie servant à récupérer des informations de réservation.

10. Agencement (1) de port de chargement selon la revendication 8 ou 9, **caractérisé en ce que** les clients (10b) de réservation comportent une interface web à des fins de réservation.
